(19) Europäisches Patentamt
European Patent Office
Office européen des brevets

(11) EP 4 156 037 A1

(12) EUROPEAN PATENT APPLICATION

(43) Date of publication:
29.03.2023 Bulletin 2023/13

(51) International Patent Classification (IPC):
G06N 3/063 (2006.01)       G06N 3/08 (2006.01)

(21) Application number: 22174962.5

(52) Cooperative Patent Classification (CPC):
G06N 3/084; G06N 3/063

(22) Date of filing: 23.05.2022

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.09.2021 JP 2021155700

(71) Applicant: FUJITSU LIMITED
Kawasaki-shi, Kanagawa 211-8588 (JP)

(72) Inventors:
• HARA, Yasushi
Kanagawa, 211-8588 (JP)
• KASAGI, Akihiko
Kanagawa, 211-8588 (JP)
• KAI, Yutaka
Kanagawa, 211-8588 (JP)
• DANJO, Takumi
Kanagawa, 211-8588 (JP)

(74) Representative: Haseltine Lake Kempner LLP
Cheapside House
138 Cheapside
London EC2V 6BJ (GB)

(54) **MACHINE LEARNING PROGRAM, MACHINE LEARNING METHOD, AND INFORMATION PROCESSING APPARATUS**

(57)     A machine learning program that causes at least one computer to execute a process, the process includes acquiring a first training rate of a first layer that is selected to stop training among layers included in a machine learning model during training of the machine learning model; setting a first time period to stop training the first layer based on the training rate; and training the first layer with controlling the training rate up to the first time period.

FIG. 1

**Description**

FIELD

The embodiments discussed herein are related to a machine learning program, a machine learning method, and an information processing apparatus.

BACKGROUND

In order to speed up machine learning of a machine learning model, it is effective to use a graphics processing unit (GPU) and it is also effective to distribute processing by using a plurality of GPUs. The speed of machine learning processing has been increased by mounting the plurality of GPUs in a node, which is an information processing apparatus, and executing machine learning processing in parallel within the node. However, it takes no small amount of time to execute Allreduce processing or reflection processing of gradient information between the GPUs.

In the machine learning of the above-mentioned machine learning model, since a new training portion has to be frequently updated every time the training is performed, it is desirable to set a relatively high training rate (LR) for determining the update frequency. On the other hand, in an existing training portion in which machine learning has already been completed, as the training portion is closer to the input side, the training rate is lower and may often become 0 in an utmost case. In the portion where the training rate is 0, although the machine learning processing does not have to be performed, a number of processing, such as Allreduce processing or reflection processing of gradient information, and weight calculation processing, are performed in vain at the same frequency as that in the new training portion.

For this reason, in recent years, the Gradient Skip technique has been used in which a layer that does not request machine learning is determined and gradient information ($\Delta w$) calculation or Allreduce processing is skipped without being performed thereon.

U.S. Patent No. 10528867, U.S. Patent Application Publication No. 2020/0090031, and U.S. Patent Application Publication No. 2019/0114537 are disclosed as related art.

SUMMARY

[TECHNICAL PROBLEMS]

However, with the technique described above, the speed may be increased by skipping the machine learning, but the accuracy of the machine learning may deteriorate depending on the layer to be skipped or the skipping timing, so that the machine learning may end without reaching target accuracy.

It is desirable to provide a machine learning program, a machine learning method, and an information processing apparatus that are capable of achieving both reduction in time until training convergence and improvement in accuracy.

[SOLUTION TO PROBLEM]

According to an aspect of the disclosure, a machine learning program causes at least one computer to execute a process, the process includes acquiring a first training rate of a first layer that is selected to stop training among layers included in a machine learning model during training of the machine learning model; setting a first time period to stop training the first layer based on the training rate; and training the first layer with (by) controlling the training rate up to the first time period.

[ADVANTAGEOUS EFFECTS OF INVENTION]

According to the disclosure, it is possible to achieve both reduction in time until training convergence and improvement in accuracy.

BRIEF DESCRIPTION OF DRAWINGS

The invention is described, by way of example only, with reference to the following drawings, in which:

FIG. 1 is a diagram describing distributed training of an information processing apparatus according to a first embodiment;
FIG. 2 is a diagram describing a reference technique of machine learning;
FIG. 3 is a diagram describing a processing example of training skipping in machine learning;

FIG. 4 is a diagram describing training skipping using a braking distance of a training rate;

FIG. 5 is a diagram describing an improvement point of training skipping using the braking distance of the training rate;

FIG. 6 is a functional block diagram illustrating a functional configuration of the information processing apparatus according to the first embodiment;

FIG. 7 is a diagram describing details of a distributed processing unit;

FIG. 8 is a diagram describing detection of a skipping candidate;

FIG. 9 is a diagram describing a relationship between a decrease in attenuation rate and the braking distance;

FIG. 10 is a diagram describing control of a training rate until training skipping;

FIG. 11 is a diagram describing a setting example of a BD period;

FIG. 12 is a diagram describing an example of a variable BD period using an LR;

FIG. 13A and FIG. 13B are flowcharts illustrating a flow of machine learning processing according to the first embodiment;

FIG. 14 is a diagram describing effects; and

FIG. 15 is a diagram describing a hardware configuration example.

## DESCRIPTION OF EMBODIMENTS

Hereinafter, embodiments of a machine learning program, a machine learning method, and an information processing apparatus disclosed in the present specification will be described in detail based on the drawings. This disclosure is not limited by the embodiment. Parts of the embodiment may be combined with each other as appropriate without arising technical inconsistency.

[First Embodiment]

[Overall Configuration]

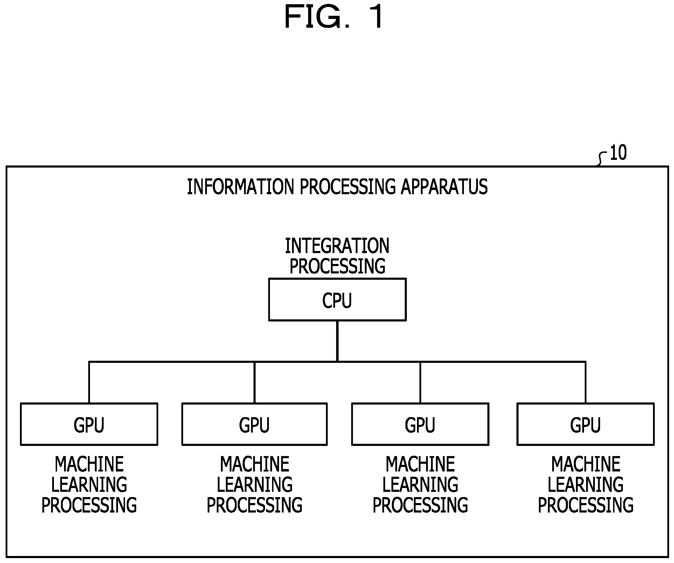

An information processing apparatus 10 according to a first embodiment generates a machine learning model by distributed processing using a plurality of GPUs in order to achieve high speed machine learning processing. FIG. 1 is a diagram describing distributed training of the information processing apparatus 10 according to the first embodiment. As illustrated in FIG. 1, the information processing apparatus 10 is an example of a computer including a central processing unit (CPU) and the plurality of GPUs. The CPU executes a control operation to supervise the overall information processing apparatus 10, and integrally manages the generation of the machine learning model. Each GPU executes machine learning of the machine learning model in response to an instruction from the CPU. A known method may be employed as the method of the distributed processing.

In recent years, the Gradient Skip technique has been used in which a layer that does not request machine learning is determined by using a training rate of each layer and training is suppressed (skipped) without performing gradient information calculation, Allreduce processing, or the like thereon.

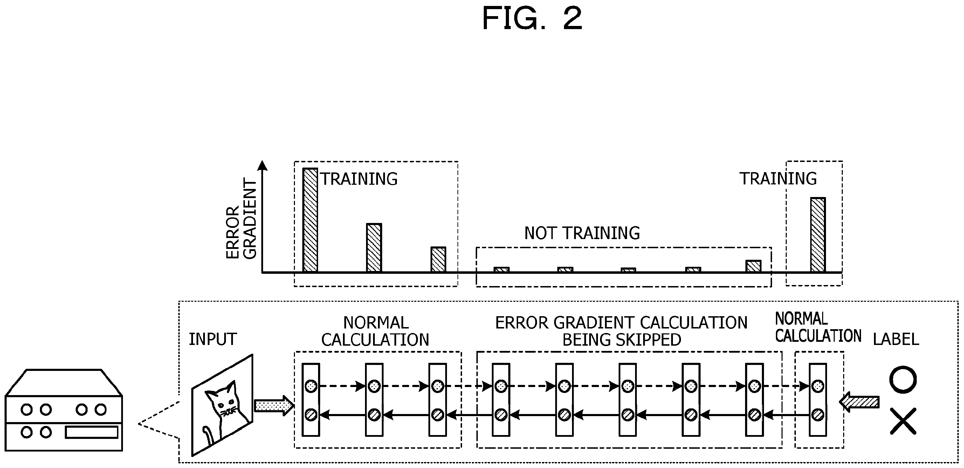

A reference technique for training skipping (hereafter, simply referred to as "skipping" in some cases) will be described. FIG. 2 is a diagram describing a reference technique of machine learning. The reference technique illustrated in FIG. 2 is a technique configured to generate a machine learning model by deep training (DL) or the like, and is also a technique configured to shorten a training time by acquiring a training state from an error gradient of DL and skipping calculation of the error gradient.

For example, the reference technique detects a layer at which a training rate indicating a progress state of training is lowered, and omits the training for the above layer, thereby shortening the training time. For example, the training is executed as usual in the next iteration for each layer at which a difference between an error gradient in the latest iteration and an error gradient in the immediately preceding iteration is equal to or larger than a threshold value, while the training is skipped in the next iteration for each layer at which the difference is smaller than the threshold value. For example, for the layer at which the training rate is lowered, subsequent machine learning processing such as the calculation of the error gradient is suppressed.

However, in the reference technique, there is a portion in which the influence of accuracy deterioration in a case where the machine learning is completely skipped is unknown. For example, with a machine learning model such as a deep neural network (DNN), in a case where error backward propagation processing in a plurality of layers is determined based on a training rate (LR) or the like and is stopped at once, accuracy is likely to decrease. When a timing (the number of epochs and the number of iterations) at which training is skipped is poor, accuracy may decrease and the final accuracy may not reach the target, in some cases.

Accordingly, in recent years, there has been known processing in which, for a layer determined as a training skipping target in which calculation of an error gradient or each processing of error backward propagation is suppressed, training is not skipped immediately but is skipped after training processing is performed to some extent by gradually decreasing a training rate of the layer at which training is to be stopped.

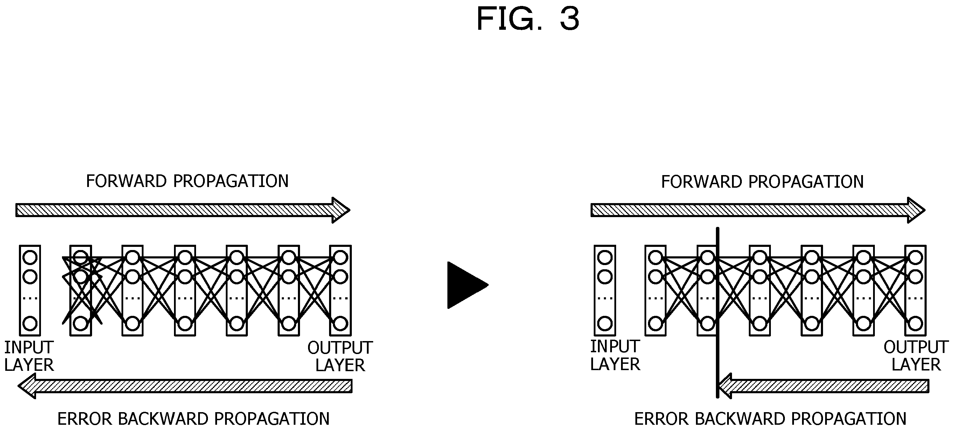

An example of training skipping will be described. FIG. 3 is a diagram describing a processing example of training skipping in machine learning. As illustrated in FIG. 3, in deep training of a machine learning model, machine learning (calculation processing) by forward propagation and update processing of weight and the like by error backward propagation are executed. At the time of the update by the error backward propagation, the update of the weight information is stopped from the iteration in which the training has progressed to some extent, and at this time, the update is stopped from the layer where the update is to be stopped on the input side. This is because training accuracy may not reach the target accuracy when the output side is stopped, but the input side has a small effect on the accuracy.

The final reaching accuracy of the machine learning using the training skipping described above has a tendency that a decrease in final reaching accuracy becomes small when the layer at which training is to be stopped is stopped after the training rate becomes small to some extent. For this reason, instead of suddenly stopping the training of the target layer, introduction of a braking distance (BD) of a training rate with which the training is stopped after lowering the training rate when a command to stop (skip) training is given is promoted. For example, machine learning is used in which layers to be stopped are reduced to familiar extreme solutions, in order from a layer close to the bottom.

An example in which the braking distance (BD) of the training rate, which is a hyper parameter, is introduced and training is gradually suppressed for each layer belonging to a skipping candidate block will be described. The block is a collection of a plurality of layers.

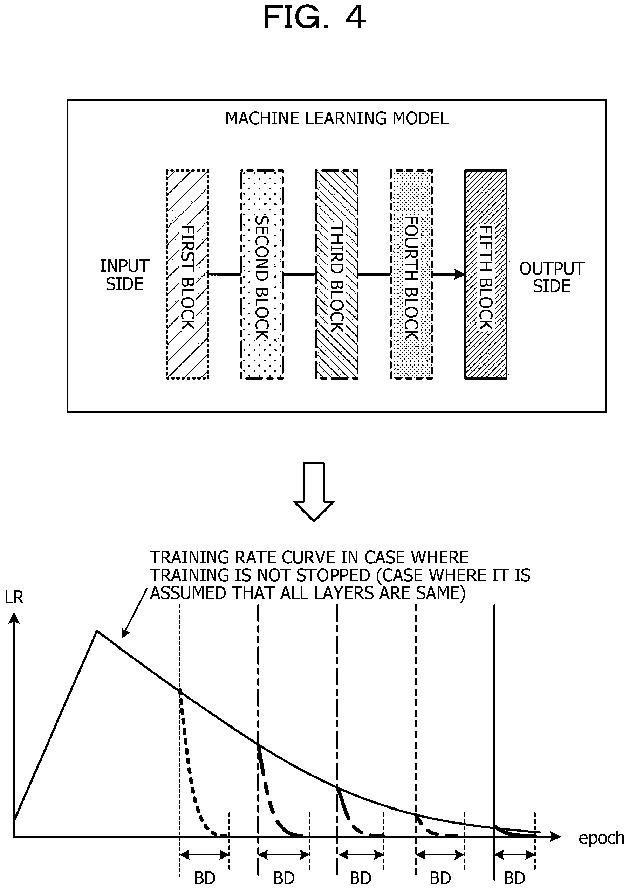

FIG. 4 is a diagram describing training skipping using a braking distance of a training rate. As illustrated in FIG. 4, the information processing apparatus that performs machine learning divides each layer into a first block, a second block, a third block, a fourth block, and a fifth block, in this order from the input side. After the end of the warm-up, the information processing apparatus controls the training rate.

When it is determined that the first block is a training skipping target, the information processing apparatus executes machine learning with a training rate significantly lower than that of normal training for each iteration. After that, when it is determined that the second block is the training skipping target, the information processing apparatus executes machine learning with a training rate significantly lower than that of the normal training for each iteration. In this manner, the information processing apparatus executes training skipping, in order from a block closest to an input layer.

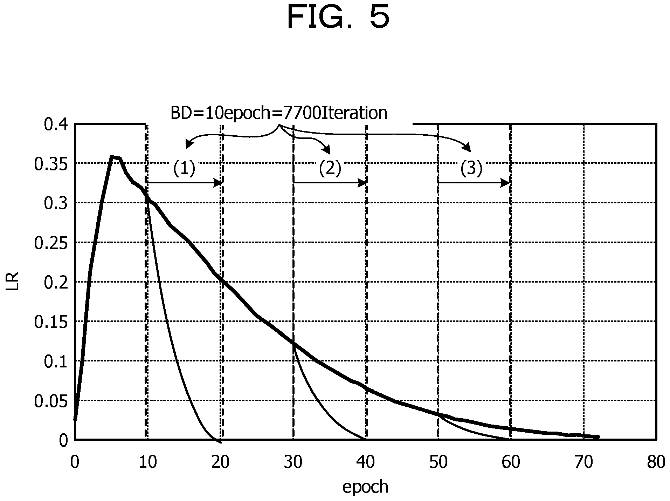

However, the training skipping using the braking distance (hereafter, may be referred to as a "BD period") of the training rate illustrated in FIG. 4 has an improvement point for further improving accuracy. FIG. 5 is a diagram describing an improvement point of training skipping using a braking distance of a training rate. As illustrated in FIG. 5, a BD is executed at uniform iteration intervals, for layers (or blocks) to which the BD is to be applied. For example, even in a case where a BD is performed at a layer having a high training rate (LR) illustrated in (1) of FIG. 5, "10 epochs = 7700 iterations" is set as a BD period. Even in a case where the BD is performed at a layer having a training rate lowered to some extent as illustrated in (2) of FIG. 5, "10 epochs = 7700 iterations" is set as the BD period. Even in a case where the BD is performed at a layer having a low training rate as illustrated in (3) of FIG. 5, "10 epochs = 7700 iterations" is set as the BD period.

For example, as the LR immediately before the control of the training skipping is performed with the BD is lower, a head to the training stop (LR = 0) is smaller, and thus a sufficient value is reached earlier, but the training is continued as it is. As a result, the speed may be increased originally by stopping the trained layer early, but the training is continued and it may take more time than desired.

For this reason, in the present embodiment, the speed-up of the machine learning is achieved by dynamically determining an optimum BD application width, in accordance with a start timing of the BD.

For example, at a time of machine learning of a machine learning model, the information processing apparatus 10 acquires an error gradient of a layer selected as a machine learning stop target, among a plurality of layers included in the machine learning model. Based on the error gradient of the layer selected as the stop target, the information processing apparatus 10 sets a time until the machine learning is stopped. For the layer selected as the stop target, the information processing apparatus 10 executes machine learning by controlling a training rate until a time for stopping is reached.

For example, the information processing apparatus 10 sets an interval between BDs to be long when a size of LR at the start is large, and sets the interval between the BDs to be short when the size of LR at the start is small, thereby achieving both reduction in time until training convergence and improvement in accuracy.

[Functional Configuration]

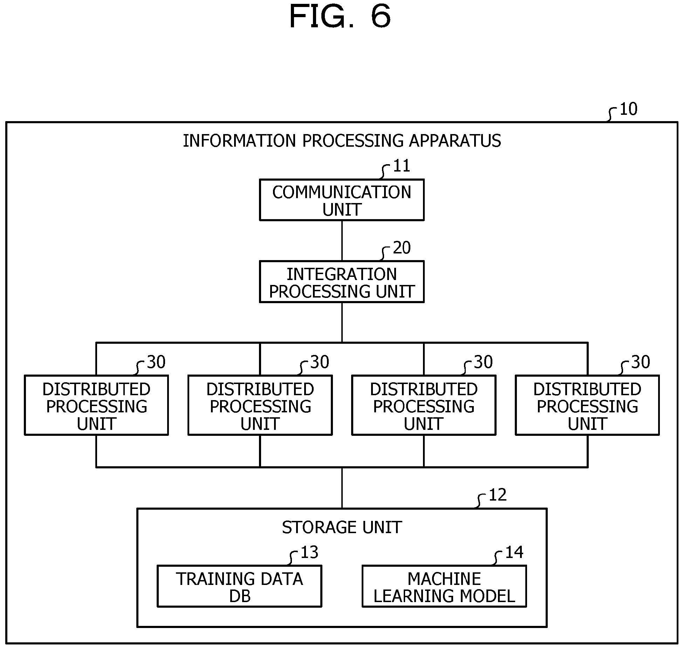

FIG. 6 is a functional block diagram illustrating a functional configuration of the information processing apparatus 10 according to the first embodiment. As illustrated in FIG. 6, the information processing apparatus 10 includes a communication unit 11, a storage unit 12, an integration processing unit 20, and a plurality of distributed processing units 30.

The communication unit 11 is a processing unit that controls communication with other apparatuses and is implemented by, for example, a communication interface or the like. For example, the communication unit 11 transmits and receives various types of data, various instructions, and the like to and from an administrator terminal.

The storage unit 12 is a processing unit that stores various types of data, various programs, and the like, and is implemented by, for example, a memory, a hard disk, or the like. The storage unit 12 stores a training data DB 13 and a machine learning model 14.

The training data DB 13 is an example of a data set configured to store training data used for machine learning of the machine learning model 14. For example, each training data stored in the training data DB 13 is configured with image data and a teacher label. The data set of the training data may be divided into subsets (batch sizes) in optional units.

The machine learning model 14 is a model generated by machine learning such as DL, and is an example of a model using a multilayer neural network configured with a plurality of layers. For example, in a case where image data is input, the machine learning model 14 executes classification of animals in the image. The machine learning model 14 may employ a DNN, a convolutional neural network (CNN), or the like.

The integration processing unit 20 is a processing unit that supervises the overall information processing apparatus 10, and is implemented by, for example, a CPU. For example, the integration processing unit 20 instructs each of the distributed processing units 30 to execute the distributed processing of machine learning, start or end the machine learning, and the like, and executes the overall control related to the machine learning.

Each distributed processing unit 30 is a processing unit configured to execute the distributed processing of the machine learning, and is implemented by, for example, a GPU. For example, each distributed processing unit 30 generates the machine learning model 14 by machine learning using each training data stored in the training data DB 13 in response to an instruction from the integration processing unit 20.

[Details of Distributed Processing Unit]

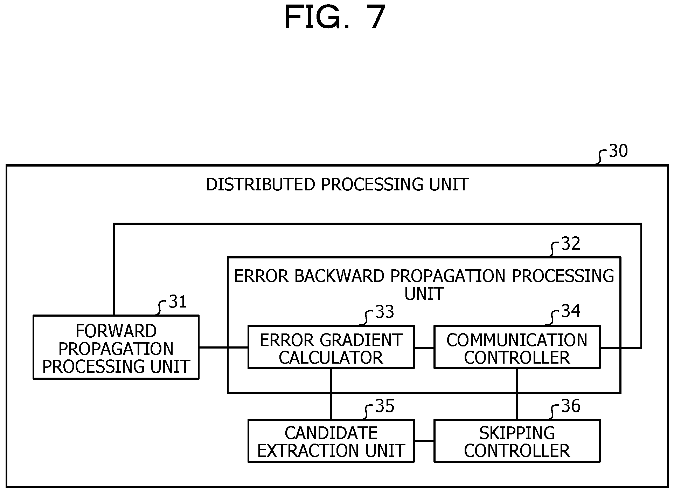

Next, details of each distributed processing unit 30 will be described. Each of the distributed processing units 30 has the same configuration. FIG. 7 is a diagram describing details of the distributed processing unit 30. As illustrated in FIG. 7, the distributed processing unit 30 includes a forward propagation processing unit 31, an error backward propagation processing unit 32, a candidate extraction unit 35, and a skipping controller 36.

The forward propagation processing unit 31 is a processing unit configured to execute forward propagation processing on each layer of the machine learning model 14. For example, the forward propagation processing unit 31 executes so-called forward propagation, and detailed description thereof is omitted. Briefly described, for example, the forward propagation processing unit 31 inputs image data, which is training data, to a head layer (input layer) of the machine learning model 14, and acquires a prediction result (classification result), which is a result of numerical calculations continuously performed from the input layer toward the last layer (output layer) of the machine learning model 14, from the output layer. The forward propagation processing unit 31 calculates an error between the prediction result and the teacher label by using the square error or the like to calculate an error function, and outputs the calculated error function to the error backward propagation processing unit 32.

The error backward propagation processing unit 32 is a processing unit that includes an error gradient calculator 33 and a communication controller 34, calculates an error of each of parameters of the machine learning model 14 by an error backward propagation method using the error function that is input from the forward propagation processing unit 31, and updates the parameters. The error backward propagation processing unit 32 executes so-called backward propagation, for example.

For example, the error backward propagation processing unit 32 calculates an error gradient of a weight of an edge between respective nodes in the neural network in the order (reverse order) from the output layer toward the input layer of the machine learning model 14. The error gradient corresponds to a value obtained by partially differentiating the error with the weight in a case where the error is regarded as a function of the weight, and represents a change amount of the error when the weight of the error edge is changed by a minute amount. The error backward propagation processing unit 32 updates each parameter such as the weight of each edge so as to reduce the error by using the error gradient.

The error gradient calculator 33 is a processing unit configured to calculate an error gradient indicating a gradient of an error with respect to each parameter of the machine learning model 14, for each of the plurality of layers included in the machine learning model 14. For example, the error gradient calculator 33 calculates an error gradient with respect to each layer included in the machine learning model 14 for each iteration, and outputs error gradient information regarding the error gradient to the candidate extraction unit 35.

In the error gradient calculation, the error gradient calculator 33 suppresses the error gradient calculation for the layer determined as the layer at which the training is to be suppressed (training skipping layer). In a case where control is performed in each block which will be described below, the error gradient calculator 33 may set only the last layer located farthest from the input layer in each block as a calculation target of the error gradient. Various known methods may be employed as the method of calculating the error gradient.

The communication controller 34 is a processing unit configured to execute Allreduce communication between the GPUs. For example, the communication controller 34 transmits and receives the error gradients between the respective GPUs to thereby sum the error gradients calculated by the plurality of GPUs for each weight of the edge, and aggregates the error gradients between the plurality of GPUs. By using the information regarding the error gradients aggregated in this manner, the error backward propagation processing unit 32 updates various parameters of the machine learning model 14.

The communication controller 34 stops the communication to the skipping target layer, in accordance with a control instruction by the skipping controller 36 which will be described below. The communication controller 34 specifies, from among the respective layers of the machine learning model 14, a layer where the error gradient calculation and the communication (Allreduce) are to be continued without stopping the training and a layer where the training is to be stopped, and controls the communication.

The candidate extraction unit 35 is a processing unit configured to extract, by using the error information calculated by the error gradient calculator 33, a layer to be a candidate for a skipping target in which the training is to be stopped. For example, the candidate extraction unit 35 extracts, as a skipping candidate, a layer at which the displacement of the error gradient between iterations is small among the respective layers.

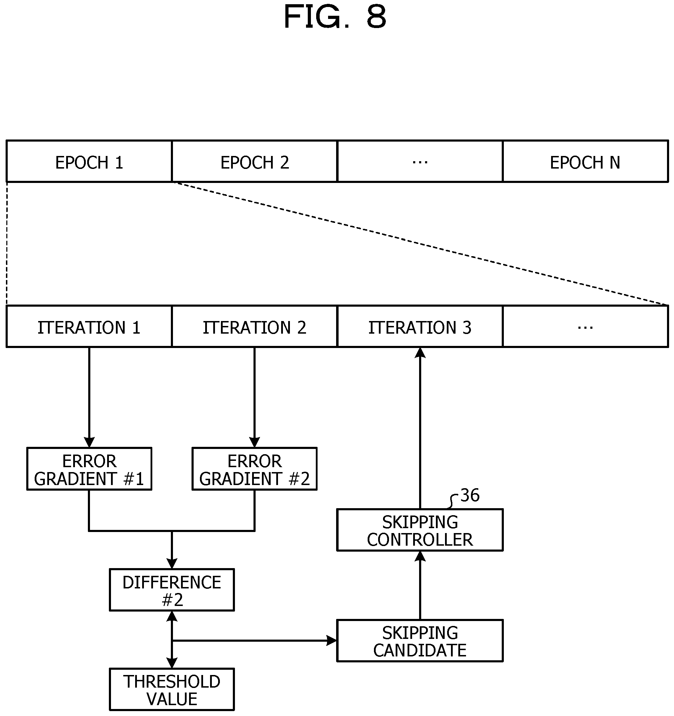

FIG. 8 is a diagram describing detection of a skipping candidate. Although FIG. 8 describes a certain layer, processing that is illustrated in FIG. 8 is executed for each layer. As illustrated in FIG. 8, the candidate extraction unit 35 extracts a skipping candidate every time iteration in each of epochs is completed.

For example, the candidate extraction unit 35 calculates and holds an error gradient #1 at a timing when iteration 1 of epoch 1 ends. Thereafter, when iteration 2 of epoch 1 ends, the candidate extraction unit 35 calculates and holds an error gradient #2, calculates a difference #2, which is a difference between the error gradients #1 and #2 (for example, a difference in absolute value), and compares the difference #2 with a threshold value.

In a case where the difference #2 is smaller than the threshold value, the candidate extraction unit 35 determines that the training of the current layer is sufficiently progressed and notifies the skipping controller 36 of information for specifying the current layer as a skipping candidate. On the other hand, in a case where the difference #2 is equal to or larger than the threshold value, the candidate extraction unit 35 determines that the training of the current layer is insufficient, does not consider the current layer as the skipping candidate, and maintains normal training.

The candidate extraction unit 35 may divide a plurality of layers included in the machine learning model 14 into blocks, and determine whether or not each block is the skipping candidate. For example, the candidate extraction unit 35 generates a plurality of blocks by sectioning each layer in order from the input layer to the output layer of the machine learning model 14 into a predetermined number. For example, the candidate extraction unit 35 generates a first block, a second block, a third block, a fourth block, and a fifth block. At this time, the candidate extraction unit 35 may exclude the output layer, the fully coupled layer, and the layer two layers before the fully coupled layer from the targets of blocking.

In this case, the candidate extraction unit 35 may calculate, for each block, an error gradient of a layer belonging to the block, and determine whether or not the above block is the skipping candidate by comparing the threshold value described above using an average value of the error gradients. As another example, the candidate extraction unit 35 may calculate, for each block, an error gradient of the last layer (a layer closest to the output layer) among layers belonging to the block, and may determine whether or not the above block is the skipping candidate by comparing the threshold value described above using the error gradient.

The skipping controller 36 is a processing unit that executes control of a training rate for skipping training, on the layer or each layer belonging to the block determined as the skipping candidate by the candidate extraction unit 35.

For example, as for the final reaching accuracy, when the training is suppressed (training is skipped) after the training rate of the layer at which the training is to be suppressed (stopped) decreases to some extent, a decrease in the final reaching accuracy tends to be small. For this reason, the skipping controller 36 introduces the braking distances (BD) of the training rate, and gradually suppresses the training, for each layer of the skipping candidate. The BD is a hyper parameter.

For example, the skipping controller 36 does not suddenly stop the training of each layer of the skipping candidate, and when a command to stop the training is given, the skipping controller 36 reduces the training rate by using a BD depending on the iteration, and then suppresses the training. For example, in a case where an LR scheduler used in the training of the machine learning model 14 is POW2, the skipping controller 36 decreases the BD in the same manner as POW2 by using Equation (1).

$$\text{BD attenuation rate} = ((BD - \text{iteration})/BD)^2 \ldots \text{Equation (1)}$$

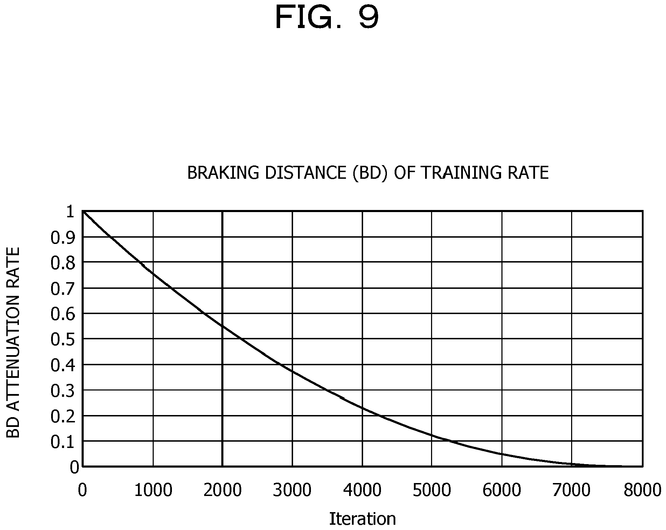

FIG. 9 is a diagram describing a relationship between a decrease in attenuation rate and a braking distance. As illustrated in FIG. 9, the skipping controller 36 multiplies a BD, which is a braking distance of LR, by the attenuation rate illustrated in Equation (1), thereby gradually decreasing the number of iterations for each iteration up to 7700, which is a set number of iterations, and decreasing a training rate. The BD in Equation (1) is a set value determined in advance, and iteration is the number of iterations at a calculation time point. FIG. 9 illustrates an example in which BD = 7700.

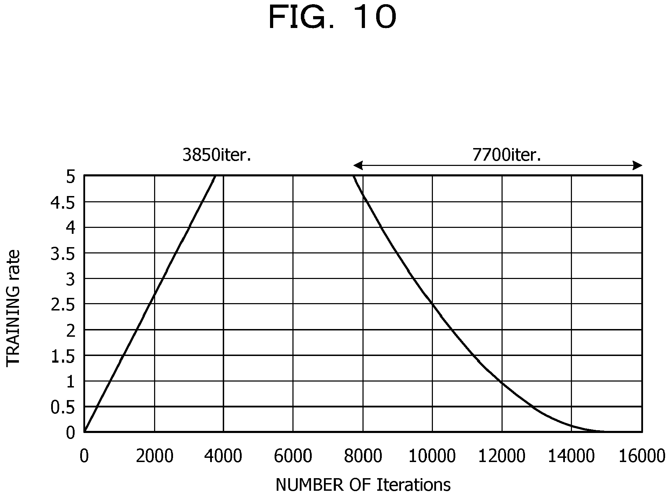

An example in which training skipping is executed on each layer determined as a skipping candidate by using the attenuation rate described above will be described. FIG. 10 is a diagram describing control of a training rate until training skipping. As illustrated in FIG. 10, when a warm-up (3850 iterations) is completed, the skipping controller 36 executes machine learning at LR = 5. In a case where the skipping controller 36 determines a skipping candidate when iteration is 7980, the skipping controller 36 calculates LR at a time of the iteration by using Equation (2), and executes machine learning by using the calculated LR. In this manner, the skipping controller 36 calculates LR for each iteration, and executes machine learning by using the calculated LR.

$$LR = EndLR + (LR \text{ at BD start} - EndLR) \times ((BD - (iter. - BD \text{ start}$$
$$iter.))/BD)^2 \dots \text{Equation (2)}$$

"LR" in Equation (2) is a training rate of a calculation target used for training. "End LR" is an LR when it is determined that training is skipped, and an attenuation (decrease) of the training rate is repeated until the "End LR" is reached. "LR at BD start" is an LR at a time of an initial setting. "Iter." is the number of iterations at a time of calculation, and after being determined as a skipping candidate, "LR" is calculated for each iteration, so "Iter." is the number of iterations. "iter. at BD start" is the number of iterations when the attenuation of the training rate starts. In the example illustrated in FIG. 10, BD = 7700 iterations, warm-up = 3850 iterations, an initial value (Base LR) = 5 corresponding to "LR at BD start", a final LR (End LR) = 0.0001, and "iter. at BD start" = 7980 iterations.

As described above, the skipping controller 36 does not suddenly stop training of each layer of a skipping candidate, but gradually decreases a training rate by using a BD depending on iterations, and performs training skipping after the training rate reaches a target training rate. At this time, the skipping controller 36 may improve training accuracy and reduce the final number of epochs, by performing training skipping in order from a layer closest to the input layer.

For example, in a case where a certain layer B (or block B) is determined to be a skipping candidate, the skipping controller 36 determines whether or not control processing for training skipping using the BD described above is executed on a layer A (block A) before the layer B (block B). In a case where the control processing for training skipping is executed on the layer A (block A), the skipping controller 36 also executes the control processing for training skipping on the layer B (block B). By contrast, in a case where the control processing for training skipping is not executed on the layer A (block A), the skipping controller 36 does not start the control processing for training skipping on the layer B (block B).

As described above, since training suppression using a uniform BD period is executed regardless of LR at a timing of a control target of training skipping, in a case of a layer having a low LR, training is continued before reaching a BD period although the training reaches a sufficient state in which the training may be stopped early. For this reason, the skipping controller 36 dynamically determines the optimum application width of the BD, in accordance with the start timing of the BD, thereby achieving further speedup.

For example, the skipping controller 36 sets the BD period until machine learning of the skipping candidate layer is stopped based on the error gradient of the skipping candidate layer selected as the suppression target, and executes the machine learning by controlling the training rate for the layer until the BD period is reached.

For example, when a layer n is determined as the skipping candidate, the skipping controller 36 reads the maximum application period "BD_Max" of a BD and the maximum value "LR_Max" of LR, which are set in advance, from the storage unit 12 or the like. "BD_Max" is a hyper parameter, and may be optionally set and changed, and "LR_Max" is a value set by the LR scheduler.

After that, the skipping controller 36 acquires the current training rate "LRn" of the skipping candidate layer n, and calculates BDn, which is a BD period of the layer n, as "BDn = (BD_Max) x (LRn/LR_Max)". By setting the BD period of the skipping candidate layer n to "BDn", the skipping controller 36 causes the error gradient calculator 33 or the like to execute control of training skipping.

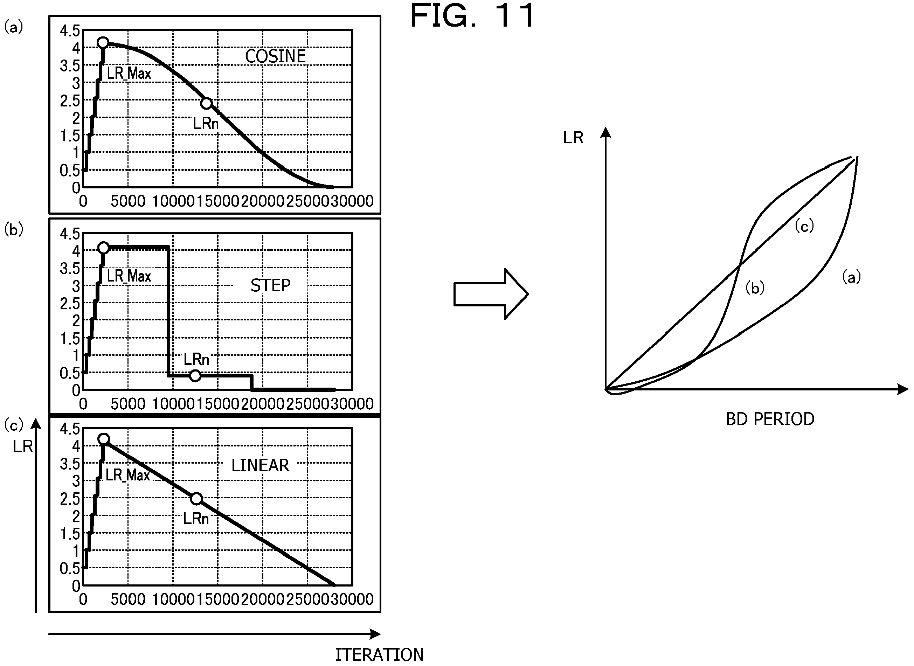

The BD period may also be set based on a change curve of LR by the LR scheduler. FIG. 11 is a diagram describing a setting example of a BD period. For example, as illustrated in (a) of FIG. 11, in a case where LR is changed with a cosine curve as iterations progress, the skipping controller 36 may perform a setting, based on a square curve of the LR. For example, the BD period is set to a short period with a low increase rate in a case where LR is smaller than a certain value, and is set to a long period with a high increase rate in a case where LR is larger than the certain value.

As illustrated in (b) of FIG. 11, in a case where LR is changed with a step curve in which LR is maintained at a predetermined value for a certain period and the decreased value is further maintained for a certain period after the certain period, and the steps are repeated as iterations progress, the skipping controller 36 may perform a setting, based on a curve similar to a sin curve, a reliability growth curve, or the like. For example, in the BD period, the increasing amount of the period with respect to the increase in LR is changed before and after the inflection point.

As illustrated in (c) of FIG. 11, in a case where LR is changed with a linear straight line in which LP is decreased by a certain value as iterations progress, the skipping controller 36 may perform the setting based on the straight line (proportional). For example, the BD period is increased in proportion to the increase rate of the LR.

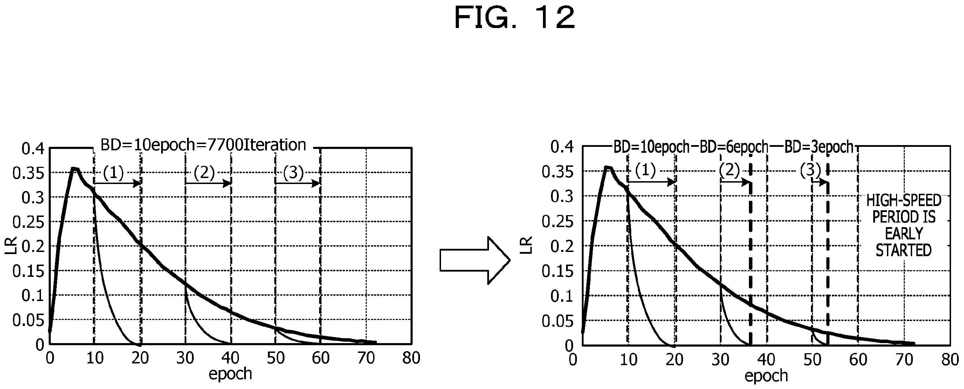

As described above, the skipping controller 36 determines the BD period (interval of braking distance) to be longer when a size of LR at the start is large and to be shorter when the size of the LR at the start is small, in accordance with the size of the LR. FIG. 12 is a diagram describing an example of a variable BD period using an LR. A left diagram in FIG. 12 illustrates a case of a reference technique in which a BD period is set to a certain value, and a right diagram in FIG. 12 illustrates a case of the present embodiment in which the BD period is dynamically set by a method according to the first embodiment.

As illustrated in the left diagram in FIG. 12, in a case where training skipping is started in a state where the LR illustrated in (1) of FIG. 12 is large, 10 epochs are set as the BD period in both the reference technique and the method according to the present embodiment. By contrast, in a case where training skipping is started in a state where the LR indicated in (2) of FIG. 12 is smaller than (1), 10 epochs are set as the BD period in the reference technique, and 6 epochs are set as the BD period in the present embodiment. In the same manner, in a case where training skipping is started in a state where the LR illustrated in (2) of FIG. 12 is further smaller, 10 epochs are set as the BD period in the reference technique, and 3 epochs, which is further small, are set as the BD period in the present embodiment.

In this manner, the skipping controller 36 determines the optimum application width of the BD period, in accordance with the start timing of the training skipping (BD).

[Flow of Processing]

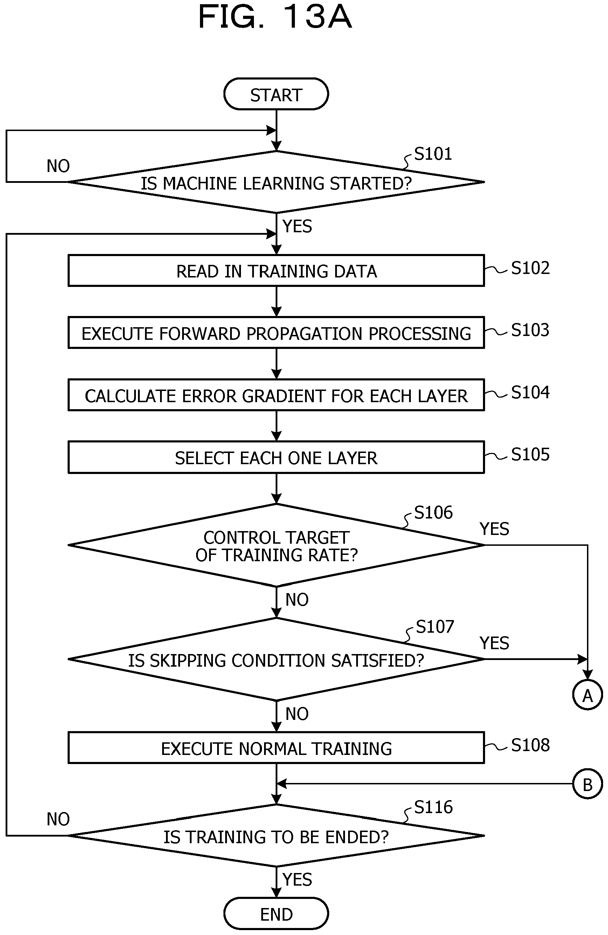

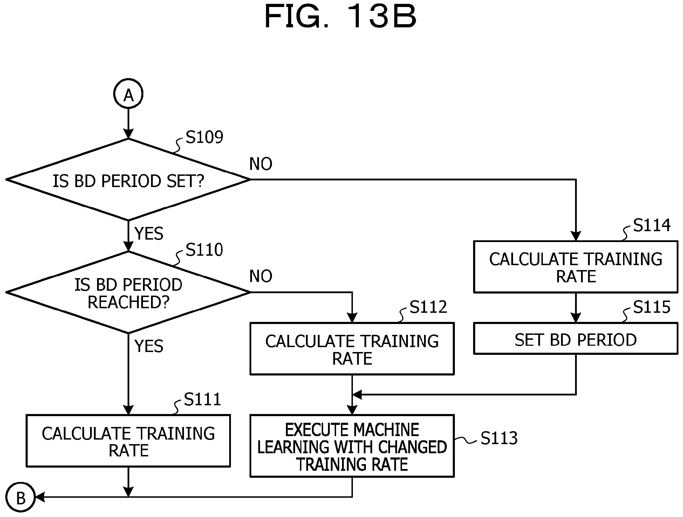

FIG. 13A and FIG. 13B are flowcharts illustrating a flow of machine learning processing according to the first embodiment. Although an example in which training skipping is controlled for each layer is described as an example here, processing may be performed for a block in which a plurality of layers are collected, in the same manner.

As illustrated in FIG. 13A and FIG. 13B, when machine learning is started (Yes in S101), the forward propagation processing unit 31 reads in training data (S102), and executes forward propagation processing (S103). After that, the error backward propagation processing unit 32 calculates an error gradient for each layer (S104). The candidate extraction unit 35 selects one layer (S105), and determines whether or not the selected layer is already a control target of a training rate (S106).

In a case where the selected layer is not yet the control target of the training rate (No in S106), the candidate extraction unit 35 determines whether or not a skipping condition is satisfied (S107). For example, in order to gradually perform skipping from the input side, the candidate extraction unit 35 determines whether or not a layer before the current processing target layer is a target of training skipping.

In a case where the target layer does not satisfy the skipping condition (No in S107), the skipping controller 36 determines normal training, and thus the error backward propagation processing unit 32 trains the target layer as usual (S108).

By contrast, in a case where the target layer satisfies the skipping condition (Yes in S107) or is already the control target of the training rate (Yes in S106), the skipping controller 36 determines whether or not a BD period is set (S109).

In a case where the BD period is already set (Yes in S109), the skipping controller 36 determines whether or not the BD period is reached (the BD period is ended) (S110). In a case where the BD period is reached (Yes in S110), the skipping controller 36 executes training skipping on the target layer (S111). By contrast, in a case where the BD period is not reached (No in S110), the skipping controller 36 calculates the training rate (S112) and instructs the error backward propagation processing unit 32 to change the training rate, so that machine learning with the changed training rate is executed (S113).

By contrast, in a case where the BD period is not set (No in S109), the skipping controller 36 calculates the training rate (S114), sets the BD period according to the training rate (S115), and instructs the error backward propagation processing unit 32 to change the training rate, so that the machine learning with the changed training rate is executed (S113).

After that, in a case where the normal training is executed (S108) or in a case where machine learning in which the training rate is changed is executed (S113), the forward propagation processing unit 31 determines whether or not to end the machine learning (S116). For example, the forward propagation processing unit 31 determines whether or not an optional termination criterion is reached, such as whether or not accuracy is reached target accuracy or whether or not a specified number of epochs is executed.

The forward propagation processing unit 31 repeats the processing in S102 and the subsequent processing in a case where the machine learning is to be continued (No in S116), and ends the machine learning and displays a training result and the like in a case where the machine learning is to be ended (Yes in S116).

[Effects]

As described above, in each layer in the machine learning model 14, the information processing apparatus 10 may skip the weight update processing or the back propagation (error backward propagation) processing of the layer for which machine learning is ended, thereby significantly reducing undesired calculation and update processing. By applying the braking distance (BD) of the training rate, the information processing apparatus 10 may suppress deterioration in accuracy, maintain the accuracy, and achieve a high-speed operation of the entire machine learning model 14.

By applying the braking distance (BD) of the training rate, the information processing apparatus 10 may improve the accuracy of the machine learning model 14, as compared with a case where the training is simply skipped or training is not skipped at all. In a case where the information processing apparatus 10 (node) mounting a plurality of GPUs is used or in a case where parallel processing configured with a plurality of information processing apparatuses 10 is performed, a proportion consumed for inter-GPU communication, inter-node communication, Allreduce processing, and reflection processing increases, so that the effect of increasing the speed by reducing the undesired calculation and update processing is further enhanced.

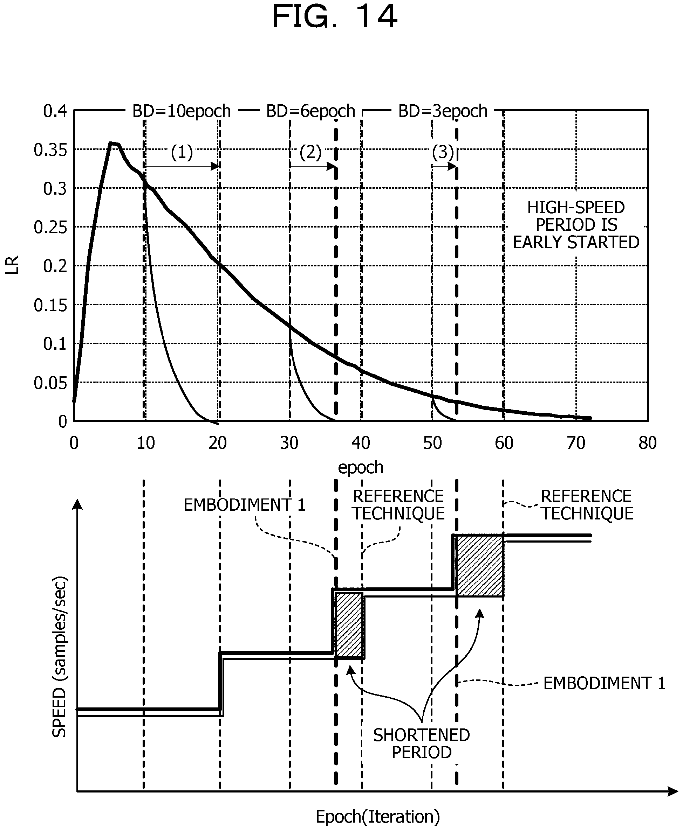

By dynamically setting the BD period in accordance with the LR at the start of training skipping, the information processing apparatus 10 may further achieve an increase in speed while suppressing a decrease in training accuracy, as compared with a case where a uniform BD period is set. FIG. 14 is a diagram describing the effects. As illustrated in FIG. 14, the information processing apparatus 10 sets 10 epochs as a BD period in a layer at which training skipping is started when an LR is "0.33", as illustrated in (1) of FIG. 14. As illustrated in (2) of FIG. 14, the information processing apparatus 10 sets 6 epochs as the BD period in the layer at which the training skipping is started when the LR is "0.125". As illustrated by (3) of FIG. 14, the information processing apparatus 10 sets 3 epochs as the BD period in the layer at which the training skipping is started when the LR is "0.03".

For example, as illustrated in the lower diagram in FIG. 14, in the first embodiment in which the BD period is dynamically set, a training time is shortened and speed-up is achieved, as compared with the reference technique in which a uniform BD period is set. Therefore, in the method of uniformly setting 10 epochs, it takes 30 epochs until machine learning is ended, but in the method according to the present embodiment, the machine learning may be ended at 19 epochs, and 11 epochs may also be reduced. Even in any case of (1) to (3), the training rate becomes sufficiently small until the training is stopped, so that the training accuracy does not decrease along with the reduction in the number of epochs.

[Second Embodiment]

While embodiments of the present disclosure have been described, the present disclosure may be implemented in various different forms other than the above-described embodiments.

[Numerical Values and like]

The number of blocks, the number of layers, the various threshold values, the numerical values, the number of GPUs, and the like used in the embodiments described above are merely examples, and may be optionally changed. The determination of training skipping is not limited to being made for each iteration, and may be made for each epoch. The skipping candidate or the like is an example of a stop target layer, and the BD period is an example of a control time that is a time period until machine learning is stopped. Preferably, the same scheduler is used as the LR scheduler and the scheduler that controls the training rate.

[Block Control and like]

For example, it is also possible to perform control of training skipping and setting of a BD period for each block which is a collection of a plurality of layers. As an example, the information processing apparatus 10 may determine that a layer is a skipping target, depending on whether or not an error gradient of the last layer or an average value of the error gradients of each layer belonging to a block among the respective layers included in the block is less than a threshold value.

Among the layers belonging to the block as the skipping target, the information processing apparatus 10 selects a layer having the largest LR at a start of training control, and sets a BD period using the LR as the BD period of the block. In this case, the information processing apparatus 10 decreases a training rate of each layer so that machine learning of each layer belonging to the block is stopped after the BD period elapses. The information processing apparatus 10 may calculate each BD period based on the LR at the start of the training control among the layers belonging to the block as the skipping target, and may set an average value of the BD periods as the BD period of the block. In the same manner, the information processing apparatus 10 may set the BD period based on an average value of the LRs at the start of the training control for the layers belonging to the block as the skipping target, as the BD period of the block.

For example, as for a layer having the smallest LR at the start of the training control, the information processing apparatus 10 may end the machine learning after the BD period based on the LR of the layer elapses, or may continue the machine learning with the smallest LR until the BD period of the block elapses.

In the embodiment described above, skipping control or BD setting may be performed in units of blocks, and may be controlled in units of layers. For example, in a case where the information processing apparatus 10 detects a plurality of layers in which a difference between the error gradients is smaller than a threshold value, the information processing apparatus 10 may determine a predetermined number of layers as skipping targets in order from the layer closest to the input layer.

[System]

Processing procedures, control procedures, specific names, and information including various types of data and parameters described in the specification or the drawings described above may be changed optionally unless otherwise specified.

Each component of each device or apparatus illustrated in the drawings is conceptually functional one and is not necessarily configured physically as illustrated in the drawings. For example, the specific form of the distribution or integration of each device or apparatus is not limited to the device or apparatus illustrated in the drawings. For example, the entirety or part of the device or apparatus may be configured so as to be functionally or physically distributed or integrated in an optional unit in accordance with various types of loads, usage states, or the like.

All or optional part of each processing function performed by each device or apparatus may be realized by a CPU and a program analyzed and executed by the CPU or may be realized as hardware using wired logic.

[Hardware]

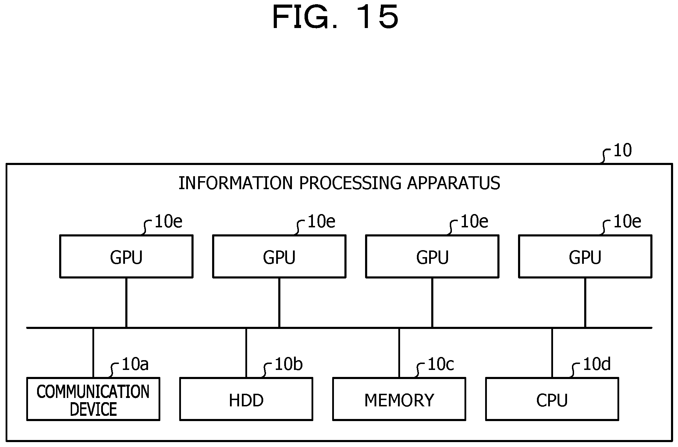

Next, a hardware configuration example of the information processing apparatus 10 described in the embodiments described above will be described. FIG. 15 is a diagram describing a hardware configuration example. As illustrated in FIG. 15, the information processing apparatus 10 includes a communication device 10a, a hard disk drive (HDD) 10b, a memory 10c, a CPU 10d, and a plurality of GPUs 10e. The respective units illustrated in FIG. 15 are coupled to one another by a bus or the like.

The communication device 10a is a network interface card or the like and communicates with another server. The HDD 10b stores a program or a DB for enabling the functions illustrated in FIG. 6, FIG. 7, or the like.

The CPU 10d executes control of the overall information processing apparatus 10, and, for example, reads out a program related to machine learning from the HDD 10b or the like and loads it on the memory 10c, so that each of the GPUs 10e that operate each process of the machine learning reads out, from the HDD 10b or the like, a program that executes the same processing as that of each processing unit illustrated in FIG. 7 and the like and loads the read program on the memory 10c, whereby a process that executes each of the functions described with reference to FIG. 7 and the like is operated. For example, each GPU 10e reads out, from the HDD 10b or the like, a program having the same functions as those of the forward propagation processing unit 31, the error backward propagation processing unit 32, the candidate extraction unit 35, the skipping controller 36, and the like. Each GPU 10e executes a process that executes the same processing as the forward propagation processing unit 31, the error backward propagation processing unit 32, the candidate extraction unit 35, the skipping controller 36, and the like.

In this manner, the information processing apparatus 10 operates as an information processing apparatus that executes various processing methods by reading out and executing programs. The information processing apparatus 10 may also realize the functions similar to the functions of the above-described embodiment by reading the program described above from a recording medium with a medium reading device and executing the above-described read program. The program described for another embodiment is not limited to the program to be executed by the information processing apparatus 10. For example, even in a case where another computer or another server executes a program or a case where the computer and the server execute a program in cooperation with each other, the present disclosure may be applied in the same manner.

This program may be distributed via a network such as the Internet. The programs may be recorded on a computer-readable recording medium such as a hard disk, a flexible disk (FD), a compact disc read-only memory (CD-ROM), a magneto-optical (MO) disk, or a Digital Versatile Disc (DVD), and may be executed by being read out from the recording medium by the computer.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A machine learning program that causes at least one computer to execute a process, the process comprising:

   acquiring a first training rate of a first layer that is selected to stop training among layers included in a machine learning model during training of the machine learning model;
   setting a first time period to stop training the first layer based on the training rate; and
   training the first layer with controlling the training rate up to the first time period.

2. The machine learning program according to claim 1, wherein the setting includes setting the first time period based on the first training rate of a previous iteration of a processing iteration.

3. The machine learning program according to claim 1 or 2, wherein the setting includes setting the first time period based on a change of the first training rate during training of the machine learning model.

4. The machine learning program according to any of the preceding claims, wherein

   the acquiring includes acquiring a second training rate of a block that is selected to stop training among blocks each of which is a collection of a plurality of layers of the layers,
   the setting includes setting a second time period to stop training the plurality of layers based on the second training rate, and
   the training includes training the plurality of layers with controlling the second training rate up to the second time period.

5. The machine learning program according to claim 4, wherein

   the acquiring includes acquiring a plurality of third training rates of each of the plurality layers included in the block, and
   the setting includes setting an average of a plurality of third time periods set based on the plurality of third training rates as the second time period.

6. The machine learning program according to claim 4 or 5, wherein the acquiring includes acquiring a plurality of third training rates of each of the plurality layers included in the block, and
   the setting includes setting the second time period based on an average of the plurality of third training rates.

7. A machine learning method for a computer to execute a process comprising:

   acquiring a first training rate of a first layer that is selected to stop training among layers included in a machine learning model during training of the machine learning model;
   setting a first time period to stop training the first layer based on the training rate; and
   training the first layer with controlling the training rate up to the first time period.

8. The machine learning method according to claim 7, wherein
   the setting includes setting the first time period based on the first training rate of a previous iteration of a processing iteration.

9. The machine learning method according to claim 7 or 8, wherein the setting includes setting the first time period based on a change of the first training rate during training of the machine learning model.

10. The machine learning method according to any of claims 7 to 9, wherein

the acquiring includes acquiring a second training rate of a block that is selected to stop training among blocks each of which is a collection of a plurality of layers of the layers,

the setting includes setting a second time period to stop training the plurality of layers based on the second training rate, and

the training includes training the plurality of layers with controlling the second training rate up to the second time period.

11. An information processing apparatus comprising:
a control unit configured to:

acquire a first training rate of a first layer that is selected to stop training among layers included in a machine learning model during training of the machine learning model,
set a first time period to stop training the first layer based on the training rate, and
train the first layer with controlling the training rate up to the first time period.

12. The information processing apparatus according to claim 11, wherein the control unit is further configured to set the first time period based on the first training rate of a previous iteration of a processing iteration.

13. The information processing apparatus according to claim 11 or 12, wherein the control unit is further configured to set the first time period based on a change of the first training rate during training of the machine learning model.

14. The information processing apparatus according to any of claims 11 to 13, wherein the control unit is further configured to:

acquire a second training rate of a block that is selected to stop training among blocks each of which is a collection of a plurality of layers of the layers,
set a second time period to stop training the plurality of layers based on the second training rate, and
train the plurality of layers with controlling the second training rate up to the second time period.

# FIG. 1

INFORMATION PROCESSING APPARATUS 10

INTEGRATION
PROCESSING

CPU

| GPU | GPU | GPU | GPU |

MACHINE
LEARNING
PROCESSING

MACHINE
LEARNING
PROCESSING

MACHINE
LEARNING
PROCESSING

MACHINE
LEARNING
PROCESSING

FIG. 2

# FIG. 3

# FIG. 4

MACHINE LEARNING MODEL

INPUT
SIDE

FIRST BLOCK

SECOND BLOCK

THIRD BLOCK

FOURTH BLOCK

FIFTH BLOCK

OUTPUT
SIDE

TRAINING RATE CURVE IN CASE WHERE
TRAINING IS NOT STOPPED (CASE WHERE IT IS
ASSUMED THAT ALL LAYERS ARE SAME)

LR

epoch

BD    BD    BD    BD    BD

# FIG. 5

# FIG. 6

INFORMATION PROCESSING APPARATUS — 10

COMMUNICATION UNIT — 11

INTEGRATION PROCESSING UNIT — 20

DISTRIBUTED PROCESSING UNIT — 30

DISTRIBUTED PROCESSING UNIT — 30

DISTRIBUTED PROCESSING UNIT — 30

DISTRIBUTED PROCESSING UNIT — 30

STORAGE UNIT — 12

TRAINING DATA DB — 13

MACHINE LEARNING MODEL — 14

# FIG. 7

DISTRIBUTED PROCESSING UNIT ⌐30

FORWARD PROPAGATION PROCESSING UNIT ⌐31

ERROR BACKWARD PROPAGATION PROCESSING UNIT ⌐32

ERROR GRADIENT CALCULATOR ⌐33

COMMUNICATION CONTROLLER ⌐34

CANDIDATE EXTRACTION UNIT ⌐35

SKIPPING CONTROLLER ⌐36

# FIG. 8

| EPOCH 1 | EPOCH 2 | ⋯ | EPOCH N |
|---------|---------|---|---------|

| ITERATION 1 | ITERATION 2 | ITERATION 3 | ⋯ |
|-------------|-------------|-------------|---|

| ERROR GRADIENT #1 | ERROR GRADIENT #2 |
|-------------------|-------------------|

DIFFERENCE #2

THRESHOLD VALUE

SKIPPING CANDIDATE

SKIPPING CONTROLLER ⌐36

# FIG. 9

BRAKING DISTANCE (BD) OF TRAINING RATE

# FIG. 10

FIG. 11

# FIG. 12

# FIG. 13A

```
                        ( START )
                            │
                            ▼
   NO          ╱───────────────────────────╲  ⟋S101
  ◄────────────  IS MACHINE LEARNING STARTED? ╲
              ╲───────────────────────────╱
                            │ YES
                            ▼
        ┌──────────────────────────────────────┐ ⟋S102
        │         READ IN TRAINING DATA          │
        └──────────────────────────────────────┘
                            │
                            ▼
        ┌──────────────────────────────────────┐ ⟋S103
        │  EXECUTE FORWARD PROPAGATION PROCESSING │
        └──────────────────────────────────────┘
                            │
                            ▼
        ┌──────────────────────────────────────┐ ⟋S104
        │  CALCULATE ERROR GRADIENT FOR EACH LAYER │
        └──────────────────────────────────────┘
                            │
                            ▼
        ┌──────────────────────────────────────┐ ⟋S105
        │          SELECT EACH ONE LAYER          │
        └──────────────────────────────────────┘
                            │
                            ▼
              ╱─────────────────────╲  ⟋S106        YES
             ╱     CONTROL TARGET     ╲──────────────────►
             ╲    OF TRAINING RATE?   ╱
              ╲─────────────────────╱
                     │ NO
                     ▼
              ╱─────────────────────────╲  ⟋S107   YES
             ╱ IS SKIPPING CONDITION      ╲──────────────►
             ╲        SATISFIED?          ╱              (A)
              ╲─────────────────────────╱
                     │ NO
                     ▼
        ┌──────────────────────────────────────┐ ⟋S108
        │         EXECUTE NORMAL TRAINING         │
        └──────────────────────────────────────┘
                            │           ◄──────────── (B)
                            ▼
   NO          ╱───────────────────────────╲  ⟋S116
  ◄────────────   IS TRAINING TO BE ENDED?   ╲
              ╲───────────────────────────╱
                            │ YES
                            ▼
                        ( END )
```

# FIG. 13B

# FIG. 14

# FIG. 15

INFORMATION PROCESSING APPARATUS ⌐10

| GPU ⌐10e | GPU ⌐10e | GPU ⌐10e | GPU ⌐10e |

| COMMUNICATION DEVICE ⌐10a | HDD ⌐10b | MEMORY ⌐10c | CPU ⌐10d |

Europäisches
Patentamt
European
Patent Office
Office européen
des brevets

**EUROPEAN SEARCH REPORT**

Application Number

EP 22 17 4962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDREW BROCK ET AL: "FreezeOut: Accelerate Training by Progressively Freezing Layers", ARXIV.ORG, CORNELL UNIVERSITY LIBRARY, 201 OLIN LIBRARY CORNELL UNIVERSITY ITHACA, NY 14853, 15 June 2017 (2017-06-15), XP080770162, * abstract; figure 1 * * page 1, line 1 – page 2, line 20 * * page 3, line 1 – line 16 * ----- | 1-14 | INV. G06N3/063 G06N3/08 |
| X | XIAO XUELI ET AL: "Fast Deep Learning Training through Intelligently Freezing Layers", 2019 INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 14 July 2019 (2019-07-14), pages 1225-1232, XP033637632, DOI: 10.1109/ITHINGS/GREENCOM/CPSCOM/SMARTDATA. 2019.00205 [retrieved on 2019-10-17] * abstract * * page 3, paragraph Method – page 6, paragraph Experiments and results * ----- | 1-14 | |
| A | US 2021/158212 A1 (KAI YUTAKA [JP] ET AL) 27 May 2021 (2021-05-27) * abstract; figures 1,2,3 * * paragraph [0009] – paragraph [0011] * ----- | 1-14 | TECHNICAL FIELDS SEARCHED (IPC)  G06N |

The present search report has been drawn up for all claims

| Place of search | Date of completion of the search | Examiner |
|---|---|---|
| The Hague | 21 November 2022 | Keresztury, Bence |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 22 17 4962

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2022

| Patent document cited in search report | | Publication date | Patent family member(s) | | Publication date |
|---|---|---|---|---|---|
| US 2021158212 | A1 | 27-05-2021 | CN | 112862087 A | 28-05-2021 |
| | | | EP | 3828776 A1 | 02-06-2021 |
| | | | JP | 2021086371 A | 03-06-2021 |
| | | | US | 2021158212 A1 | 27-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10528867 B
- US 20200090031
- US 20190114537